# FASCICULE DE BREVET EUROPEEN

(11) **EP 3 172 031 B1**
(45) Date de publication et mention de la délivrance du brevet: **14.10.2020**
(21) Numéro de dépôt: 15759847.5
(22) Date de dépôt: 17.07.2015
(51) Int. Cl.: B29C 49/68, B29C 49/06

(54) **UNITE DE CHAUFFE DE CORPS CREUX, QUI COMPREND UNE CAVITE A BASSE TEMPERATURE**
EINHEIT ZUR ERWÄRMUNG VON HOHLKÖRPERN, MIT EINEM RESONATOR BEI NIEDRIGER TEMPERATUR
UNIT FOR HEATING HOLLOW BODIES, WHICH COMPRISES A LOW-TEMPERATURE CAVITY

(30) Priorité: 23.07.2014 FR 1457118
(43) Date de publication de la demande: 31.05.2017
(73) Titulaire: Sidel Participations, 76930 Octeville-sur-Mer (FR)
(72) Inventeur: FEUILLOLEY, Guy, F-76930 Octeville-sur-mer (FR)
(74) Mandataire: Sidel Group
(86) Numéro de dépôt international: PCT/FR2015/051975
(87) Numéro de publication internationale: WO 2016/012705

(56) Documents cités:
- EP-A1- 2 754 545
- DE-A1-102009 057 021
- US-A1- 2009 214 690
- US-A1- 2012 267 832
- US-B2- 8 278 603

## Description

L'invention a trait au traitement thermique (ou chauffe) des corps creux en matière plastique, notamment des ébauches de récipients (tels que bouteilles, pots, flacons) - le terme « ébauche » désignant soit une préforme, obtenue par injection d'une matière plastique dans un moule, soit un corps creux intermédiaire obtenu à partir d'une préforme ayant subi au moins une première opération de formage et destiné à en subir au moins une seconde.

Le traitement thermique est généralement réalisé au défilé au sein d'une unité de chauffe, couramment appelée four, comprenant au moins une source de rayonnement électromagnétique et des parois délimitant une cavité dans laquelle défilent les ébauches, l'une au moins des parois comprenant au moins un réflecteur tourné vers la cavité et propre à réfléchir vers celle-ci le rayonnement.

Une technique classique de chauffe consiste à employer des lampes tubulaires à incandescence de type halogène, rayonnant suivant la loi de Planck sur un spectre continu.

Cette technique, très répandue, ne va pas sans inconvénient. Outre qu'une partie importante de l'énergie électrique consommée par les lampes est gaspillée par énergie thermique, on note une forte élévation de la température des parois bordant la cavité en raison de leur absorption d'une partie de l'énergie émise par les lampes.

Il en résulte une élévation de la température de l'air ambiant dans la cavité, nécessitant un refroidissement. Celui-ci est généralement réalisé au moyen d'une circulation forcée d'un fluide caloporteur - généralement de l'air pulsé au moyen d'une ventilation - dans la cavité, pour réguler la température de l'air ambiant. Cette technique, illustrée notamment par le brevet français FR 2 863 931 (Sidel) et son équivalent américain US 7 448 866, a fait ses preuves mais demeure perfectible notamment pour les raisons suivantes :
- il est difficile d'obtenir une régulation fine de la température ambiante dans la cavité à partir d'une telle ventilation,
- les phases transitoires de mise en route et d'arrêt sont longues en raison de la montée (respectivement de la descente) progressive en température de l'unité de chauffe, au détriment de la productivité,
- les parois latérales réémettent vers la cavité une partie de l'énergie absorbée sous forme d'infrarouge et se comportent dès lors comme des éléments de chauffage radiant perturbant le profil de chauffe escompté pour les corps creux,
- les parois latérales demeurent chaudes malgré la ventilation, ce qui nécessite, à chaque intervention de maintenance sur l'unité de chauffe, de laisser celles-ci revenir à la température ambiante permettant une manipulation des pièces sans risque de brûlure ;
- une usure accélérée des pièces des parois, en raison des phénomènes de fatigue thermique ;
- la ventilation dans la cavité nécessite de prévoir de larges ouvertures, par lesquelles le rayonnement peut s'échapper hors de

la cavité, au détriment du rendement et de la sécurité des personnels environnants.

Par ailleurs, le document US2012-267832A1 décrit un four pour préformes. Le four est équipé d'un réflecteur latéral supporté par un corps de refroidissement. La demande US2009-214690A1 décrit un four pour préformes ayant des sources de radiation électromagnétiques cohérentes. Le document EP2754545A1 décrit un four pour préformes avec un dispositif de refroidissement. Le document US278603B2 décrit un four pour préformes équipé d'un réflecteur.

Un objectif est par conséquent de remédier à ces inconvénients.

A cet effet, il est proposé une unité de chauffe d'ébauches de corps creux en matière plastique, qui inclut une cavité dans laquelle défilent les ébauches et comprend :
- un dispositif émetteur équipé d'au moins une source radiante de rayonnement électromagnétique pointant vers la cavité ;
- un bâti délimitant la cavité et comprenant un ensemble de pièces limitrophes à celle-ci, chaque pièce limitrophe étant munie d'une face interne, tournée vers la cavité et propre à absorber le rayonnement électromagnétique issu du dispositif émetteur ou à le réfléchir vers la cavité ;
- un circuit de refroidissement intégralement formé hors de la cavité, et qui comprend un canal fluidique parcouru par un fluide caloporteur, chaque pièce limitrophe étant en contact thermique avec un canal fluidique.

Diverses caractéristiques supplémentaires peuvent être prévues, seules ou en combinaison :
- le canal est un conduit à contour fermé qui s'étend à l'intérieur d'une pièce limitrophe ;
- le fluide caloporteur est liquide ;
- une pièce limitrophe est une paroi latérale délimitant transversalement la cavité, et dont une face interne est réflectrice du rayonnement électromagnétique ;
- une pièce limitrophe est un réflecteur délimitant vers le bas la cavité, et dont une face interne est réflectrice du rayonnement électromagnétique ;
- une pièce limitrophe est un absorbeur dont une face interne principale, qui forme un bord latéral supérieur de la cavité, est absorbante pour le rayonnement électromagnétique ;
- l'absorbeur présente une face interne secondaire, adjacente à la face interne principale et réflectrice du rayonnement électromagnétique ;
- la ou chaque source radiante est un laser ;
- la ou chaque source radiante est une diode laser ;
- le dispositif émetteur est équipé d'une matrice de diodes laser de type VCSEL.

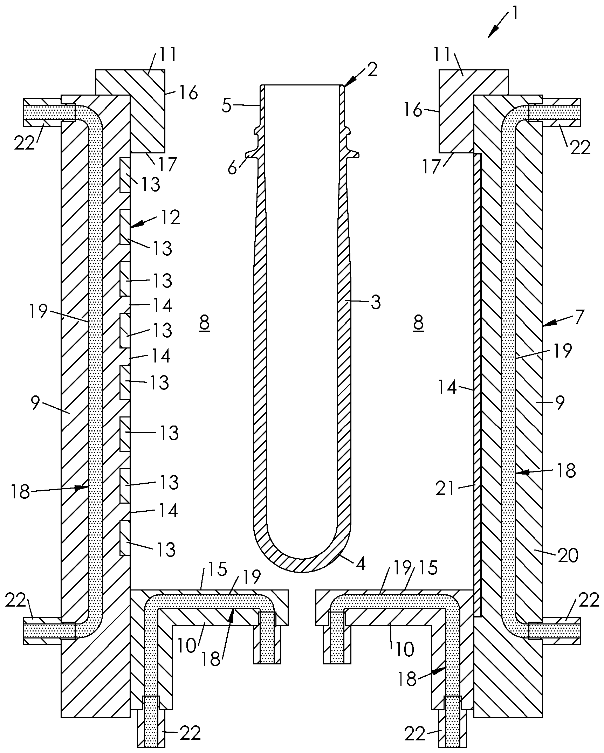

D'autres objets et avantages de l'invention apparaîtront à la lumière de la description d'un mode de réalisation, faite ci-après en référence à la figure annexée, qui est une vue en coupe d'une unité **1** de chauffe d'ébauches **2** de corps creux en matière plastique.

Dans l'exemple (non limitatif) illustré, les ébauches **2** sont des préformes destinées, une fois ramollies par la chauffe, à subir une opération de soufflage ou d'étirage soufflage dans un moule pour former un récipient tel qu'une bouteille. Chaque préforme **2** comprend un corps **3** sensiblement cylindrique, un fond **4** hémisphérique fermant le corps **3** à une extrémité inférieure de celui-ci, et un col **5** qui prolonge le corps **3** à une extrémité supérieure de celui-ci. Le col **5** est séparé du corps **3** par une collerette **6** qui sert notamment de moyen d'indexage et de support lors de la manipulation de la préforme **2.**

Les ébauches **2** pourraient encore être des récipients intermédiaires, connus en soi et obtenus lors d'une étape préalable de soufflage ou d'étirage soufflage à partir de préformes telles que celles qui viennent d'être décrites. Il s'agit de récipients qui, pour diverses raisons, nécessitent un traitement thermique complémentaire. A l'instar des préformes, de tels récipients intermédiaires comprendraient un corps **3**, un fond **4** fermant le corps **3** à une extrémité inférieure de celui-ci, et un col **5** qui prolongerait le corps **3** à une extrémité supérieure de celui-ci, en étant séparé du corps **3** par une collerette **6** pouvant servir notamment de moyen d'indexage et de support lors de la manipulation de ce récipient. Le col **5** et la collerette **6** d'un tel récipient intermédiaire sont ceux présents sur la préforme permettant de l'obtenir.

L'unité **1** de chauffe comprend un bâti **7** délimitant une cavité **8** en forme de tunnel dans laquelle défilent les ébauches **2** (ici des préformes) les unes derrière les autres. Le bâti **7** comprend un ensemble de pièces **9**, **10**, **11** limitrophes à la cavité **8**, c'est-à-dire que ces pièces **9**, **10**, **11** sont situées en bordure de la cavité **8** dont elles forment les frontières spatiales dans tout plan transversal perpendiculaire - au moins localement - à la direction de défilement des ébauches **2.** En d'autres termes, une pièce est dite limitrophe dès lors qu'elle possède une face interne qui délimite (au moins localement) la cavité **8.**

Parmi les pièces limitrophes, on compte notamment :
- une paroi **9** latérale, qui délimite transversalement la cavité **8** en regard du corps **3** des ébauches **2**,
- un réflecteur **10** inférieur, qui délimite vers le bas la cavité **8**, à l'aplomb du fond **4** des ébauches **2**,
- un absorbeur **11** (au sens électromagnétique du terme, comme nous le verrons ci-après), qui délimite transversalement la cavité **8** en regard du col **5** des ébauches **2.**

Dans l'exemple illustré, le bâti **7** comprend deux parois **9** latérales en regard, deux réflecteurs **10** inférieurs montés chacun sur une paroi **9** latérale, à la même hauteur, et deux absorbeurs **11**, également montés chacun sur une paroi **9** latérale à la même hauteur.

L'unité **1** de chauffe comprend en outre un dispositif **12** émetteur, équipé d'au moins une source **13** radiante de rayonnement électromagnétique pointant vers la cavité **8.**

Le terme « radiant » signifie que la source **13** de rayonnement est agencée pour transmettre de l'énergie calorique à l'ébauche **2** sans utiliser l'air comme vecteur de transmission.

Selon un mode de réalisation, la (ou chaque) source **13** émet dans le domaine des micro-ondes, à une longueur d'onde comprise entre 1 mm et 30 cm environ.

Selon un autre mode de réalisation, la (ou chaque) source **13** émet dans le domaine du proche infrarouge, à une longueur d'onde comprise entre 800 nm et 2000 nm environ, et par exemple de l'ordre de 1000 nm.

Dans l'exemple illustré, le dispositif **12** émetteur comprend une pluralité de sources **13** identiques pointant vers la cavité **8.** Chaque source **13** est par exemple un laser, tel qu'une diode laser, notamment du type VCSEL (vertical-cavity surface-emitting laser), qui permet une organisation des sources **13** sous forme de matrice.

Afin de confiner le rayonnement dans la cavité **8**, de sorte à optimiser le rendement de la chauffe et éviter la dispersion du rayonnement hors de la cavité **8** (notamment pour préserver la sécurité du personnel), chaque pièce **9**, **10**, **11** limitrophe est munie d'une face interne tournée vers la cavité **8**, en limite de celle-ci, propre à :
- absorber le rayonnement électromagnétique issu du dispositif **12** émetteur, ou
- à réfléchir ce rayonnement vers la cavité **8.**

Ainsi, la ou chaque paroi **9** latérale présente une face **14** interne réflectrice du rayonnement électromagnétique. Dans l'exemple illustré, la face **14** interne de la paroi **9** latérale s'étend verticalement, en regard du corps **3** des ébauches **2** pour réfléchir vers celui-ci le rayonnement issu du dispositif **12** émetteur. L'une au moins des parois **9** latérales peut, comme dans l'exemple illustré, porter ou même intégrer le dispositif **12** émetteur. Dans ce cas, la face **14** interne réflectrice peut s'étendre autour du dispositif **12** émetteur, verticalement et/ou horizontalement (par exemple à la manière d'un cadre).

Selon un mode de réalisation, les parois **9** latérales sont similaires et portent (ou intègrent) chacune un dispositif **12** émetteur. Les dispositifs **12** émetteurs peuvent être disposés en quinconce, une face **14** réflectrice étant en ce cas disposée en regard de chaque dispositif **12** émetteur de la paroi **9** latérale opposée pour réfléchir vers la cavité **8** une fraction du rayonnement non absorbée directement par les ébauches **2.**

Le réflecteur **10** inférieur présente également une face **15** interne réflectrice du rayonnement électromagnétique. Dans l'exemple illustré, la face **15** interne du réflecteur **10** inférieur s'étend horizontalement, en regard du fond **4** des ébauches **2** pour réfléchir vers celui-ci le rayonnement issu du dispositif **12** émetteur et ainsi améliorer encore le rendement de la chauffe.

L'absorbeur **11** présente quant à lui une face **16** interne principale, qui forme un bord latéral supérieur de la cavité **8**, et qui est absorbante pour le rayonnement électromagnétique. Dans l'exemple illustré, cette face **16** interne principale s'étend verticalement, en regard du col **5** des ébauches **2** pour absorber le rayonnement issu du (des) dispositif(s) **12** émetteur(s) et minimiser la part de celui-ci atteignant le col **5** ou s'échappant de la cavité **8.** La face **16** interne principale est par exemple formée par un revêtement absorbant tel qu'une peinture noire.

Selon un mode de réalisation illustré sur la figure annexée, l'absorbeur **11** présente en outre une face **17** interne secondaire, adjacente à la face **16** interne principale et réflectrice du rayonnement électromagnétique. Dans l'exemple illustré, la face **17** interne secondaire s'étend horizontalement et est orientée vers le bas, de sorte à confiner autant que possible dans la cavité **8** le rayonnement issu du dispositif **12** émetteur et minimiser la part de celui-ci qui s'en échappe.

Chaque face **14**, **15**, **17** réflectrice est par exemple formée par polissage. En variante, une face **14**, **15**, **17** réflectrice peut être formée par un revêtement métallique, par exemple sous forme d'une mince couche d'or, d'argent, d'aluminium ou de tout autre matériau offrant un bon coefficient de réflexion spéculaire aux longueurs d'onde du rayonnement émis par le dispositif émetteur. Un tel revêtement peut être obtenu par dépôt en phase vapeur, physique (PVD, typiquement par pulvérisation cathodique) ou chimique (CVD).

En l'absence de régulation thermique, l'absorption du rayonnement par la face **16** absorbante de l'absorbeur **11** provoque une élévation de la température de celui-ci. De même, aucune face **14**, **15**, **17** réflectrice ne possède de propriétés optiques parfaites au point de réfléchir la totalité du rayonnement, de sorte qu'une part (même faible) de celui-ci est absorbée dans la pièce **9**, **10**, **11** limitrophe, qui voit ainsi sa température s'élever.

Cet échauffement est susceptible de provoquer, au-delà d'une certaine température, la génération par chaque pièce **9**, **10**, **11** limitrophe d'un rayonnement infrarouge qui, retransmis vers la cavité **8**, est susceptible de perturber le profil de chauffe que l'on souhaite conférer aux ébauches **2.**

C'est pourquoi l'unité **1** de chauffe est équipée d'un circuit **18** de refroidissement, qui comprend au moins un canal **19** fluidique parcouru par un fluide caloporteur.

Comme on le voit sur la figure annexée, le circuit **18** de refroidissement est intégralement formé hors de la cavité **8**, c'est-à-dire hors du volume délimité par les faces **14**, **15**, **16**, **17** internes (réflectrices ou absorbantes) des pièces **9**, **10**, **11** limitrophes.

Par ailleurs, comme on le voit également sur cette figure, chaque pièce **9**, **10**, **11** limitrophe est en contact thermique avec un canal **19** fluidique.

Dans l'exemple illustré, chaque pièce **9**, **10**, **11** limitrophe est pourvue d'un canal **19** fluidique parcouru par le fluide caloporteur. Ce canal **19** fluidique s'étend au moins localement au voisinage de la face **14**, **15**, **16**, **17** interne, pour favoriser l'échange thermique avec celle-ci.

Chaque pièce **9**, **10**, **11** limitrophe est réalisée dans un matériau bon conducteur de la chaleur, par exemple dans un matériau métallique tel qu'acier, cuivre, aluminium, ou leurs alliages, afin de permettre un bon échange thermique avec le canal **19** fluidique.

Si la pièce **9**, **10**, **11** limitrophe est monobloc, le contact thermique est assuré par la matière séparant le canal **19** de la face **14**, **15**, **16**, **17** interne. Si la pièce **9**, **10**, **11** limitrophe comprend au contraire un support **20** et un élément **21** rapporté intégrant au moins partiellement la face **14**, **15**, **16**, **17** interne (comme dans l'exemple illustré où la paroi **9** latérale située à droite sur la figure comprend une plaque **21** rapportée formant la face **14** interne réflectrice), le contact thermique entre la face **14**, **15**, **16**, **17** interne et le canal **19** est assuré par le contact entre l'élément **21** rapporté et le support **20**, qui forme alors un pont thermique.

Selon un mode de réalisation illustré, chaque pièce **9**, **10**, **11** limitrophe intègre son propre canal **19** fluidique ; il s'agit par exemple d'un conduit à contour fermé qui s'étend à l'intérieur de la pièce **9**, **10**, **11** limitrophe, en partie au voisinage de la face **14**, **15**, **16**, **17** interne.

Le fluide caloporteur, représenté en grisé sur la figure, est de préférence liquide (procurant un échange thermique plus efficace qu'un gaz), par exemple de l'eau. La température du liquide à l'entrée dans le conduit est par exemple compris entre 15°C et 25 °C, de sorte à maintenir la pièce **9**, **10**, **11** limitrophe à une température inférieure ou égale à 40°C (et de préférence inférieure à 30°C).

Comme on le voit sur la figure annexée, des connecteurs **22** peuvent être prévus pour assurer le raccordement du (de chaque) canal **19** à des flexibles (non représentés) d'amenée et d'évacuation du fluide.

En variante, le canal **19** peut être formé par des ailettes prévues en saillie sur une face externe de la pièce **9**, **10**, **11** limitrophe, le fluide caloporteur étant alors un gaz (par exemple de l'air) pulsé circulant de manière forcée dans les ailettes pour refroidir la pièce **9**, **10**, **11** limitrophe.

Quoi qu'il en soit, l'échange thermique entre le fluide caloporteur et la pièce **9**, **10**, **11** limitrophe permet d'assurer une régulation thermique de la pièce **9**, **10**, **11** limitrophe (et plus précisément de la face **14**, **15**, **16**, **17** interne) à une température prédéterminée relativement basse (inférieure, comme nous venons de le voir, à 40°C).

Il en résulte les avantages suivants :
- les pièces **9**, **10**, **11** limitrophes, relativement froides, ne réémettent que peu (ou pas) de rayonnement infrarouge vers la cavité **8**, ce qui évite de perturber le profil de chauffe des ébauches **2** ;
- les pièces **9**, **10**, **11** limitrophes n'entraînent pas non plus de chauffe parasite de la cavité **8** par convection thermique, de sorte qu'il n'est pas nécessaire d'assurer un refroidissement par circulation forcée d'air à l'intérieur de la cavité **8** elle-même ;
- en l'absence d'une telle ventilation, il n'est pas nécessaire de prévoir des ouvertures pour le passage de l'air, ce qui permet de mieux confiner le rayonnement et ainsi accroître le rendement de la chauffe tout en protégeant le personnel environnant ;
- les pièces **9**, **10**, **11** limitrophes sont soumises à une moindre fatigue thermique, au bénéfice de leur durée de vie et de la fiabilité de l'unité **1** de chauffe ;
- il est possible d'obtenir une régulation fine de la température ambiante dans la cavité **8** en l'absence de rayonnement parasite dû aux pièces **9**, **10**, **11** limitrophes, au bénéfice de la précision de chauffe ;
- les phases de montée en température et de refroidissement de l'unité **1** de chauffe, respectivement au lancement du cycle de chauffe et à son arrêt, sont de courte durée, au bénéfice, respectivement, de la productivité et de la rapidité d'intervention des personnels de maintenance ;
- les opérations de maintenance peuvent être conduites rapidement et sans risque de brûlure.

## Revendications

1. Unité (**1**) de chauffe d'ébauches (**2**) de corps creux en matière plastique, qui inclut une cavité (**8**) dans laquelle défilent les ébauches (**2**) et comprend :
- un dispositif (**12**) émetteur équipé d'au moins une source (**13**) radiante de rayonnement électromagnétique pointant vers la cavité (**8**) ;
- un bâti (**7**) délimitant la cavité (**8**) et comprenant un ensemble de pièces (**9**, **10**, **11**) limitrophes à celle-ci, chaque pièce (**9**, **10**, **11**) limitrophe étant munie d'une face (**14**, **15**, **16**, **17**) interne, tournée vers la cavité (**8**) et propre à absorber le rayonnement électromagnétique issu du dispositif (**12**) émetteur ou à le réfléchir vers la cavité (**8**) ;
- un circuit (**18**) de refroidissement, qui comprend un canal (**19**) fluidique parcouru par un fluide caloporteur ;
l'unité (**1**) de chauffe étant **caractérisée en ce que** le circuit (**18**) de refroidissement est intégralement formé hors de la cavité (**8**), et chaque pièce (**9, 10, 11**) limitrophe est en contact thermique avec un canal (**19**) fluidique, le canal (**19**) étant un conduit à contour fermé qui s'étend à l'intérieur de la pièce (**9**, **10**, **11**) limitrophe.

2. Unité (**1**) de chauffe selon la revendication 1, **caractérisée en ce qu'**une pièce (**9**) limitrophe est une paroi latérale délimitant transversalement la cavité (**8**), et dont une face (**14**) interne est réflectrice du rayonnement électromagnétique.

3. Unité (**1**) de chauffe selon l'une des revendications précédentes, **caractérisée en ce qu'**une pièce (**10**) limitrophe est un réflecteur délimitant vers le bas la cavité (**8**), et dont une face (**15**) interne est réflectrice du rayonnement électromagnétique.

4. Unité (**1**) de chauffe selon l'une des revendications précédentes, **caractérisée en ce qu'**une pièce (**11**) limitrophe est un absorbeur dont une face (**16**) interne principale, qui forme un bord latéral supérieur de la cavité (**8**), est absorbante pour le rayonnement électromagnétique.

5. Unité (**1**) de chauffe selon la revendication 4, **caractérisée en ce que** l'absorbeur (**11**) présente une face (**17**) interne secondaire, adjacente à la face (**16**) interne principale et réflectrice du rayonnement électromagnétique.

6. Unité (**1**) de chauffe selon l'une des revendications précédentes, **caractérisée en ce que** la ou chaque source (**13**) radiante est un laser.

7. Unité (**1**) de chauffe selon la revendication 6, **caractérisée en ce que** la ou chaque source (**13**) radiante est une diode laser.

8. Unité (**1**) de chauffe selon la revendication 7, **caractérisée en ce que** le dispositif (**12**) émetteur est équipé d'une matrice de diodes laser de type VCSEL.

## Patentansprüche

1. Einheit (1) zur Erwärmung von Rohlingen (2) von Hohlkörpern aus Kunststoff, welche einen Hohlraum (8) aufweist, in welchem die Rohlinge (2) durchlaufen, und umfasst:
- eine Emissionsvorrichtung (12), die mit wenigstens einer Strahlungsquelle (13) für elektromagnetische Strahlung ausgestattet ist, die auf den Hohlraum (8) gerichtet ist;
- ein Gestell (7), das den Hohlraum (8) begrenzt und eine Anordnung von Teilen (9, 10, 11) umfasst, die an diesen angrenzen, wobei jedes angrenzende Teil (9, 10, 11) mit einer Innenseite (14, 15, 16, 17) versehen ist, die dem Hohlraum (8) zugewandt ist und dafür eingerichtet ist, die von der Emissionsvorrichtung (12) kommende elektromagnetische Strahlung zu absorbieren oder sie in Richtung des Hohlraums (8) zu reflektieren;
- einen Kühlkreislauf (18), welcher einen Fluidkanal (19) umfasst, der von einem Wärmeträgerfluid durchströmt wird;
wobei die Einheit (1) zur Erwärmung **dadurch gekennzeichnet ist, dass** der Kühlkreislauf (18) vollständig außerhalb des Hohlraums (8) ausgebildet ist und jedes angrenzende Teil (9, 10, 11) sich in thermischem Kontakt mit einem Fluidkanal (19) befindet, wobei der Kanal (19) eine Leitung mit geschlossener Kontur ist, welche sich im Inneren des angrenzenden Teils (9, 10, 11) erstreckt.

2. Einheit (1) zur Erwärmung nach Anspruch 1, **dadurch gekennzeichnet, dass** ein angrenzendes Teil (9) eine Seitenwand ist, die den Hohlraum (8) in Querrichtung begrenzt und von der eine Innenseite (14) die elektromagnetische Strahlung reflektiert.

3. Einheit (1) zur Erwärmung nach einem der vorhergehenden Ansprüche, **dadurch gekennzeichnet, dass** ein angrenzendes Teil (10) ein Reflektor ist, der den Hohlraum (8) nach unten begrenzt und von dem eine Innenseite (15) die elektromagnetische Strahlung reflektiert.

4. Einheit (1) zur Erwärmung nach einem der vorhergehenden Ansprüche, **dadurch gekennzeichnet, dass** ein angrenzendes Teil (11) ein Absorber ist, von dem eine hauptsächliche Innenseite (16), welche einen oberen seitlichen Rand des Hohlraums (8) bildet, absorbierend für die elektromagnetische Strahlung ist.

5. Einheit (1) zur Erwärmung nach Anspruch 4, **dadurch gekennzeichnet, dass** der Absorber (11) eine sekundäre Innenseite (17) aufweist, die der hauptsächlichen Innenseite (16) benachbart ist und die elektromagnetische Strahlung reflektiert.

6. Einheit (1) zur Erwärmung nach einem der vorhergehenden Ansprüche, **dadurch gekennzeichnet, dass** die oder jede Strahlungsquelle (13) ein Laser ist.

7. Einheit (1) zur Erwärmung nach Anspruch 6, **dadurch gekennzeichnet, dass** die oder jede Strahlungsquelle (13) eine Laserdiode ist.

8. Einheit (1) zur Erwärmung nach Anspruch 7, **dadurch gekennzeichnet, dass** die Emissionsvorrichtung (12) mit einer Matrix von Laserdioden vom Typ VCSEL ausgestattet ist.

## Claims

1. Unit (1) for heating blanks (2) of hollow bodies made of plastic material, which includes a cavity (8) through which the blanks (2) run and comprises:
- an emitter device (12) equipped with at least one radiating source (13) of electromagnetic radiation pointing towards the cavity (8);
- a frame (7) delimiting the cavity (8) and comprising a set of parts (9, 10, 11) adjacent thereto, each adjacent part (9, 10, 11) being provided with an internal face (14, 15, 16, 17), turned towards the cavity (8) and designed to absorb the electromagnetic radiator from the emitter device (12) or to reflect it towards the cavity (8);
- a cooling circuit (18), which comprises a fluidic channel (19) that is passed through by a heat transfer fluid;
the heating unit (1) being **characterized in that** the cooling circuit (18) is entirely formed outside of the cavity (8), and each adjacent part (9, 10, 11) is in thermal contact with a fluidic channel (19), the channel (19) being a duct with closed outline which extends inside the adjacent part (9, 10, 11).

2. Heating unit (1) according to Claim 1, **characterized in that** an adjacent part (9) is a lateral wall transversely delimiting the cavity (8), and of which an internal face (14) is reflective to the electromagnetic radiation.

3. Heating unit (1) according to one of the preceding claims, **characterized in that** an adjacent part (10) is a reflector delimiting the cavity (8) downwards, and of which an internal face (15) is reflective to the electromagnetic radiation.

4. Heating unit (1) according to one of the preceding claims, **characterized in that** an adjacent part (11) is an absorber of which a main internal face (16), which forms a top lateral edge of the cavity (8) is absorbent for the electromagnetic radiation.

5. Heating unit (1) according to Claim 4, **characterized in that** the absorber (11) has a secondary internal face (17) adjacent to the main internal face (16) and reflective to the electromagnetic radiation.

6. Heating unit (1) according to one of the preceding claims, **characterized in that** the or each radiating source (13) is a laser.

7. Heating unit (1) according to Claim 6, **characterized in that** the or each radiating source (13) is a laser diode.

8. Heating unit (1) according to Claim 7, **characterized in that** the emitter device (12) is equipped with an array of laser diodes of VCSEL type.
